# EUROPEAN PATENT APPLICATION

(11) **EP 4 701 034 A1**
(43) Date of publication of application: **25.02.2026**
(21) Application number: 25194647.1
(22) Date of filing: 07.08.2025
(51) Int. Cl.: H02J 7/00, H01M 10/48, H02J 7/34

(54) **EXTERNAL BATTERY AND CONTROL METHOD FOR CHARGING OR DISCHARGING OF THE EXTERNAL BATTERY**

(30) Priority: 08.08.2024 KR 20240106430
(71) Applicant: SAMSUNG SDI CO., LTD., Yongin-si, Gyeonggi-do 17084 (KR)
(72) Inventor: OH, Seotaek, 17084 Yongin-si, Gyeonggi-do (KR)
(74) Representative: Gulde & Partner

(57) **Abstract**

An external battery includes a battery cell, a charging unit configured to generate a charging current with an external power supplied from a charger to an input terminal thereof and transfer the charging current to the battery cell, a main controller unit, MCU, configured to control charging of the battery cell by the charging current, and a switch unit between the charging unit and the battery cell, wherein, when the switch unit is in an on state, the MCU changes to an active mode and allows the charging current to be transferred to the battery cell, and when the switch unit is in an off state, entering by the MCU a sleep mode and cutting off the charging current transferred to the battery cell.

## Description

### CROSS-REFERENCE TO RELATED APPLICATIONS

This application claims the benefit of the Korean Patent Application No. 10-2024-0106430 filed on August 8, 2024, which is hereby incorporated by reference as if fully set forth herein.

### BACKGROUND

### 1. Field

The present disclosure relates to an external battery and a control method for charging or discharging of the external battery, and particularly, to an external battery and a control method for charging or discharging of the external battery, which may minimize a consumption current of the external battery.

### 2. Description of the Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly consisting of a positive electrode and a negative electrode, a case that accommodates the electrode assembly, a terminal part connected to the electrode assembly, etc.

The above information disclosed in this Background section is for enhancement of understanding of the background of the present disclosure, and therefore, it may contain information that does not constitute related (or prior) art.

### SUMMARY

Embodiments include an external battery, including a battery cell, a charging unit configured to generate a charging current with an external power supplied from a charger to an input terminal thereof and transfer the charging current to the battery cell, a main controller unit (MCU) configured to control charging of the battery cell by the charging current, and a switch unit between the charging unit and the battery cell, wherein, when the switch unit is in an on state, entering by the MCU an active mode, the active mode allowing the charging current to be transferred to the battery cell, and when the switch unit is in an off state, entering by the MCU a sleep mode, the sleep mode cutting off the charging current transferred to the battery cell.

The external battery may further include a protection circuit unit between the battery cell and the switch unit.

When the switch unit is in the on state, entering by the MCU the active mode, the active mode allowing a discharging current output from the battery cell to be transferred to an external device connected to an output terminal, and when the switch unit is in an off state, entering by the MCU the sleep mode, which cuts off the discharging current transferred to the external device.

The external battery may further include a DC-DC converter configured to convert a voltage, output from the battery cell, into a voltage having a level for charging of the external device to transfer to the output terminal.

When the switch unit is in an off state, the MCU may turs off the charging unit and the DC-DC converter to cut off the charging current and the discharging current.

The switch unit may include a charging field effect transistor (FET) configured to control the charging current input from the input terminal, a discharging FET configured to control a discharging current output to an output terminal, and a slide switch configured to switch the charging FET and the discharging FET.

When the switch unit is in an on state, the MCU senses the charging current or the discharging current, and when the charging current or the discharging current is not sensed for a predetermined time, entering by the MCU the sleep mode, which switches the charging FET and the discharging FET to an off state.

When the switch unit is in an off state, the MCU senses the charging current, and when the charging current is sensed, entering by the MCU the active mode, which switches the charging FET to an off state.

When the switch unit is in an off state, the MCU senses the discharging current, and when the discharging current is sensed, entering by the MCU the active mode, which switches the discharging FET to an on state.

The external battery may further include a display unit configured to display a charging state of the battery cell and a state of the MCU.

Embodiments include a control method for charging or discharging of an external battery, the control method including providing a charging unit configured to generate a charging current with an external power supplied from a charger to an input terminal and transfer the charging current to a battery cell and a switch unit between the charging unit and the battery cell, and when the switch unit is in an on state, a main controller unit (MCU) enters an active mode and allows the charging current to be transferred to the battery cell, and when the switch unit is in an off state, entering by the MCU a sleep mode, which cuts off the charging current transferred to the battery cell.

The control method may further include providing a protection circuit unit between the battery cell and the switch unit.

The control method may further include, when the switch unit is in an on state, entering by the MCU the active mode, which allows a discharging current output from the battery cell to be transferred to an external device connected to an output terminal, and when the switch unit is in an off state, entering by the MCU the sleep mode, which cuts off the discharging current transferred to the external device.

The control method may further include providing a DC-DC converter configured to convert a voltage, output from the battery cell, into a voltage having a level for charging of the external device to transfer to the output terminal.

Cutting off the charging current may include, when the switch unit is in an off state, turning off the charging unit to cut off the charging current, and the cutting off of the discharging current may include, when the switch unit is in an off state, turning off the DC-DC converter to cut off the discharging current.

Providing the switch unit may include providing a switch unit including a charging field effect transistor (FET) configured to control the charging current input from the input terminal, a discharging FET configured to control the discharging current output to an output terminal, and a slide switch configured to switch the charging FET and the discharging FET.

The control method may further include, when the switch unit is in an on state, sensing the charging current or the discharging current using the MCU, and when the charging current or the discharging current is not sensed for a predetermined time, entering by the MCU the sleep mode, which switches the charging FET and the discharging FET to an off state.

The control method may further include, when the switch unit is in an off state, sensing the charging current using the MCU, and when the charging current is sensed, entering by the MCU the active mode, which switches the charging FET to an off state.

The control method may further include, when the switch unit is in an off state, sensing the discharging current using the MCU, and when the discharging current is sensed, entering by the MCU the active mode and switching the discharging FET to an on state.

The control method may further include displaying a charging state of the battery cell and a state of the MCU using a display unit.

### BRIEF DESCRIPTION OF THE DRAWINGS

Features will become apparent to those of ordinary skill in the art by describing in detail exemplary embodiments with reference to the attached drawings, in which:
FIG. 1 is a block diagram of an external battery according to one or more embodiments of the present disclosure; and
FIG. 2 is a flowchart for describing a control method for charging or discharging of an external battery, according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Prior to the description, it is noted that the terms or words used in this specification and claims should not be construed as being limited to common or dictionary meanings but instead should be understood to have meanings and concepts in agreement with the spirit of the present disclosure based on the principle that an inventor can define the concept of each term suitably in order to describe his/her own ideas in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

lt will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

Hereinafter, the present disclosure will be described in detail with reference to the accompanying drawings.

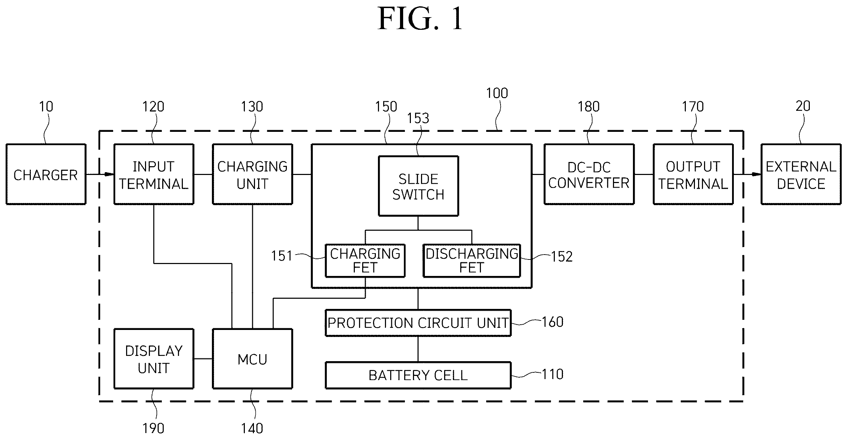

FIG. 1 is a block diagram of an external battery 100 according to one or more embodiments of the present disclosure.

Referring to FIG. 1, the external battery 100 according to embodiments of the present disclosure may include a battery cell 110, an input terminal 120, a charging unit 130, a main controller unit (MCU) 140, a switch unit 150, a protection circuit unit 160, an output terminal 170, a DC-DC converter 180, and a display unit 190.

The battery cell 110 may be a chargeable/dischargeable battery cell (e.g., a secondary battery) where an electrode assembly having a positive electrode/separator/negative electrode structure is sealed in a battery case and impregnated with a lithium electrolyte. Such an electrode assembly may generally have a jelly-roll structure (a winding type) where a positive electrode and a negative electrode of a long sheet type, where an active material is coated on both surfaces thereof, are round wound with a separator therebetween, or a stacking (stack-type) structure where a plurality of positive electrodes and negative electrodes each having a certain size, where an active material is coated on both surfaces thereof, are sequentially stacked with a separator therebetween.

The battery cell 110 may use all of a cylindrical battery cell and an angular battery cell, where an electrode assembly is embedded in a battery case of a metal can, based on a shape of a battery, and a pouch-type battery cell where an electrode assembly is embedded in a battery case of an aluminum laminate sheet. Also, the battery cell 110 may have a structure where two or more battery cells are connected to one another in series and/or parallel.

The input terminal 120 may be a portion connected to a terminal of a charger 10 and may transfer an external power, supplied from the charger 10, to the charging unit 130. The input terminal 120 may be implemented as various types, based on the kind of charger 10.

The charging unit 130 may generate a charging current by using external power supplied from the input terminal 120, and then, may supply the charging current to the battery cell 110 to allow the battery cell 110 to be charged, or may supply the charging current to an external device 20 to allow the external device 20 to be charged. In one or more embodiments, the charging unit 130 may be implemented as a charging integrated chip (IC). This enables a compact design and a low-loss and cost-efficient charging process. A level of the charging current output from the charging unit 130 may vary based on the specification of the charger 10 connected to the input terminal 120. Accordingly, the MCU 140 may sense a voltage flowing in the input terminal 120 to determine the specification of the charger 10 and may control the charging unit 130 so that the charging current based on the specification of the charger 10 is output from the charging unit 130.

The MCU 140 may overall control a configuration of the external battery 100 and may perform control so that the battery cell 110 is charged by the charging current.

The switch unit 150 may be disposed between the charging unit 130 and the battery cell 110. The switch unit 150 may transfer an on signal or an off signal to the MCU 140, and thus, may allow a mode of the MCU 140 to be changed and may allow a charging current or a discharging current of the battery cell 110 to be transferred or cut off. In an embodiment, when the switch unit 150 is in an on state, the MCU 140 may change to an active mode and may allow the charging current to be transferred to the battery cell 110, and when the switch unit 150 is in an off state, the MCU 140 may change to a sleep mode and may allow the charging current to be transferred to the battery cell 110. In other embodiments, when the switch unit 150 is in an on state, the MCU 140 may change to the active mode and may allow the discharging current output from the battery cell 110 to be transferred to the external device 20 connected to the output terminal 170, and when the switch unit 150 is in an off state, the MCU 140 may change to the sleep mode and may cut off the discharging current transferred to the external device 20. The external battery 100 according to embodiments of the present disclosure may turn off the switch unit 150 to change to the sleep mode, and thus, may decrease a consumption current of the external battery 100.

In one or more embodiments, the switch unit 150 may include a charging field effect transistor (FET) 151 which controls the charging current input from the input terminal 120, a discharging FET 152 which controls the discharging current output to the output terminal 170, and a slide switch 153 which switches between the charging FET 151 and the discharging FET 152.

In this case, when the switch unit 150 is an on state, the MCU 140 may sense the charging current or the discharging current, and when the charging current or the discharging current is not sensed for a certain (or predetermined) time, the MCU 140 may change to the sleep mode and may switch the charging FET 151 and the discharging FET 152 to an off state. When the charging current or the discharging current is not sensed for a certain time, the external battery 100 according to embodiments of the present disclosure may change to the sleep mode and may thus minimize a consumption current of the external battery 100.

Moreover, when the switch unit 150 is in an off state, the MCU 140 may sense the charging current, and when the charging current is sensed, the MCU 140 may change to the active mode and may switch the charging FET 151 to an off state. In some embodiments, when the switch unit 150 is in an off state, the MCU 140 may sense the discharging current, and when the discharging current is sensed, the MCU 140 may change to the active mode and may switch the discharging FET 152 to an on state. When the charging current or the discharging current is sensed after changing to the sleep mode, the external battery 100 according to embodiments of the present disclosure may change to the active mode, and thus, the external battery may be immediately used by connecting only a charger or an external device without an undesired additional action of a user.

The protection circuit unit 160 may be disposed between the battery cell 110 and the switch unit 150 and may be electrically connected to the battery cell 110, and thus, may control an overcharging voltage, an over-discharging voltage, and a discharging overcurrent of the battery cell 111 to protect the battery cell 111. In embodiments, the protection circuit unit 160 may be implemented as a battery protection IC. The protection circuit unit 160 may be disposed at a previous stage with respect to the switch unit 150 and may allow an electrical connection with the battery cell 110 to be maintained even when the switch unit 150 is turned off, and thus, may allow a protection operation of the battery cell 110 to be performed.

The output terminal 170 may be connected to the external device 20 and may transfer electrical energy, supplied from the battery cell 110, to the external device 20. A shape of the output terminal 170 may be implemented as various shapes, based on the kind of external device 20.

Here, the external device 20 may include all devices, driven by a battery embedded therein, such as personal digital assistants (PDA), portable phones, and notebook computers. For a nonlimiting example, the external device 20 may include devices of various types which are driven with electrical energy supplied from the external battery 100, or charge a battery included in the external device 20 by using the electrical energy supplied from the external battery 100. Hereinafter, for convenience of description, an example where charging of the external device 20 denotes an operation of charging the battery embedded in the external device 20 will be described.

The DC-DC converter 180 may convert a voltage, output from the battery cell 110, into a voltage having a level for charging of the external device 20 to transfer to the output terminal 170. In embodiments, when the switch unit 150 is in an off state, the MCU 140 may turn off the charging unit 130 and the DC-DC converter 180 and may thus cut off the charging current and the discharging current. Accordingly, the MCU 140 may cut off a current transferred to the charging unit 130 and the DC-DC converter 180 in the sleep mode, thereby minimizing a consumption current.

The display unit 190 may be a part which displays a balance of the battery cell 110, and the MCU 140 may control the display unit 190 by using a voltage of the battery cell 110. In embodiments, the display unit 190 may display a charging state of the battery cell 110 and a state of the MCU 140. The user may check whether the MCU 140 is in the active mode or the sleep mode, based on the display unit 190.

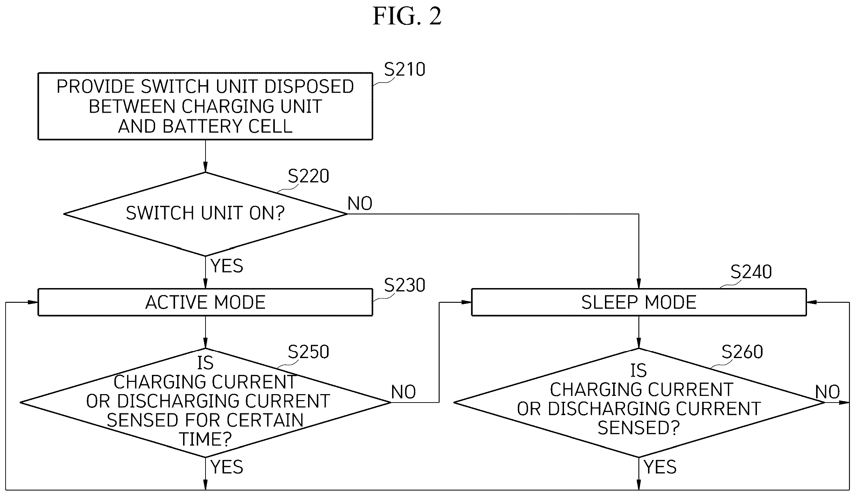

FIG. 2 is a flowchart for describing a control method for charging or discharging of an external battery, according to embodiments of the present disclosure.

As illustrated in FIG. 2, the control method for charging or discharging of the external battery according to embodiments of the present disclosure may include steps S210 to S260.

Step S210 may be a step of providing a charging unit which generates a charging current with an external power supplied from a charger to an input terminal to transfer to a battery cell and a switch unit which is disposed between the charging unit and the battery cell. In embodiments, step S210 may be a step of providing a switch unit which includes: a charging FET configured to control the charging current input from the input terminal; a discharging FET configured to control a discharging current output to an output terminal; and a slide switch which switches between the charging FET and the discharging FET.

Step S220 may be a step of checking whether the switch unit is in an on state.

Step S230 may be a step of, when the switch unit is in an on state, allowing an MCU to change to the active mode and allowing the charging current to be transferred to the battery cell. In embodiments, step S230 may include a step of, when the switch unit is in an on state, allowing the MCU to change to the active mode and allowing the discharging current output from the battery cell to be transferred to an external device connected to an output terminal.

Step S240 may be a step of, when the switch unit is in an off state, changing the MCU to the sleep mode and cutting off the charging current transferred to the battery cell. In embodiments, step S240 may include a step of, when the switch unit is in an off state, changing the MCU to the sleep mode and cutting off the discharging current transferred to the external device.

Step S250 may be a step of, when the switch unit is in an on state, sensing the charging current or the discharging current for a certain time by using the MCU. In step S250, when the charging current or the discharging current is not sensed for a certain time, the MCU may change to the sleep mode in step S240 and may switch the charging FET and the discharging FET to an off state. Also, when the charging current or the discharging current is sensed for a certain time, the MCU may maintain the active mode in step S230.

Step S260 may be a step of, when the switch unit is in an off state, sensing the charging current or the discharging current by using the MCU. In step S260, when the charging current or the discharging current is sensed, the MCU may change to the active mode in step S230 and may switch the charging FET and the discharging FET to an on state. Also, when the charging current or the discharging current is not sensed, the MCU may maintain the sleep mode in step S240.

Hereinabove, the control method for charging or discharging of an external battery according to embodiments of the present disclosure has been described with reference to the flowchart illustrated in the drawing. To provide a simple description, the control method is illustrated as a series of blocks and has been described, but the present disclosure is not limited to the order of the blocks and some blocks may be provided simultaneously or in order which differs from the illustration and description of the present disclosure, or the order of blocks, a flow path, and various other branches for accomplishing the same or similar result may be implemented. Also, all blocks illustrated for implementing a method described herein may not be needed.

Furthermore, in the description given above with reference to FIG. 2, based on an implementation example of the present disclosure, each step may be further divided into additional steps, or may be combined into fewer steps. Also, some steps may be omitted depending on the case, or the order between steps may be changed. Furthermore, despite the other omitted descriptions, the description of FIG. 1 may be applied to the description of FIG. 2. Also, the description of FIG. 2 may be applied to the descriptions of FIG. 1.

According to embodiments of the present disclosure, the switch unit disposed between the charging unit and the battery cell may be provided, and as the switch unit is turned off to change to the sleep mode, a consumption current of the external battery may be reduced.

According to embodiments of the present disclosure, when a charging current or a discharging current is not sensed for a certain time, a mode may be changed to the sleep mode, and thus, a consumption current of the external battery may be minimized.

According to embodiments of the present disclosure, when the charging current or the discharging current is sensed after changing to the sleep mode, a mode may be changed to the active mode, and thus, the external battery may be immediately used by connecting only a charger or an external device without an undesired additional action of a user.

An aspect of the present disclosure is directed to providing an external battery and a control method for charging or discharging of the external battery, which may minimize a consumption current of the external battery.

However, the technical problem to be solved by the present disclosure is not limited to problem(s) noted above, and other problems not mentioned herein, and aspects and features of the present disclosure that would address such problems, will be clearly understood by those skilled in the art from the description of the present disclosure.

Electronic devices (for example, notebook computers, portable phones, personal digital assistant (PDA), etc.), which are recently used, have been developed to be portable in use. Such portable electronic devices are supplied with electrical energy used for use by using a battery mainly. Recently, portable electronic devices have additional functions added thereto as well as a unique function, and moreover, are being diversified in function so that various functions are performed with only one portable electronic device. Therefore, electrical energy needed for use is progressively increasing also, and due to this, a basic battery having a larger capacity is required.

To this end, external batteries which are portable without being used with being attached to portable electronic devices have been developed. In external batteries, it is required to minimize a consumption current, so as to enable use for a long time after being buffered.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An external battery (100), comprising:
a battery cell (110, 111);
a charging unit (130) configured to generate a charging current with an external power supplied from a charger (10) to an input terminal (120) thereof and transfer the charging current to the battery cell (110, 111);
a main controller unit, MCU, (140) configured to control charging of the battery cell (110, 111) by the charging current; and
a switch unit (150) between the charging unit (130) and the battery cell (110, 111),
wherein, when the switch unit (150) is in an on state, entering by the MCU (140) an active mode, the active mode allowing the charging current to be transferred to the battery cell (110, 111), and when the switch unit (150) is in an off state, entering by the MCU (140) a sleep mode, the sleep mode cutting off the charging current transferred to the battery cell (110, 111).

2. The external battery (100) as claimed in claim 1, further comprising a protection circuit unit (160) between the battery cell (110, 111) and the switch unit (150).

3. The external battery (100) as claimed in claim 1 or 2, wherein, when the switch unit (150) is in the on state, entering by the MCU (140) the active mode, which allows a discharging current output from the battery cell (110, 111) to be transferred to an external device (20) connected to an output terminal (170), and when the switch unit (150) is in an off state, entering by the MCU (140) the sleep mode, which cuts off the discharging current transferred to the external device (20).

4. The external battery as claimed in claim 3, further comprising a DC-DC converter (180) configured to convert a voltage, output from the battery cell (110, 111), into a voltage having a level for charging of the external device (20) to transfer to the output terminal (170) and/or wherein, when the switch unit (150) is in an off state, the MCU (140) turns off the charging unit (130) and the DC-DC converter (180) to cut off the charging current and the discharging current.

5. The external battery (100) as claimed in claims 1 to 4, wherein the switch unit (150) comprises:
a charging field effect transistor, FET, configured to control the charging current input from the input terminal (120);
a discharging FET (152) configured to control a discharging current output to an output terminal (170); and
a slide switch (153) configured to switch the charging FET (151) and the discharging FET (152).

6. The external battery (100) as claimed in claim 5, wherein, when the switch unit (150) is in an on state, the MCU (140) senses the charging current or the discharging current, and when the charging current or the discharging current is not sensed for a predetermined time, entering by the MCU (140) the sleep mode, which switches the charging FET (151) and the discharging FET (152) to an off state.

7. The external battery (100) as claimed in claim 5, wherein, when the switch unit (150) is in an off state, the MCU (140) senses the charging current, and when the charging current is sensed, entering by the MCU (140) the active mode, which switches the charging FET (151) to an on state.

8. The external battery (100) as claimed in claim 5, wherein, when the switch unit (150) is in an off state, the MCU (140) senses the discharging current, and when the discharging current is sensed, entering by the MCU (140) the active mode, which switches the discharging FET (152) to an on state.

9. The external battery (100) as claimed in claims 1 to 8, further comprising a display unit (190) configured to display a charging state of the battery cell (110, 111) and a state of the MCU (140).

10. A control method for charging or discharging of an external battery (100), the control method comprising:
providing a charging unit (130) configured to generate a charging current with an external power supplied from a charger (10) to an input terminal (120) and transfer the charging current to a battery cell (110, 111) and a switch unit (150) between the charging unit (130) and the battery cell (110, 111); and
when the switch unit (150) is in an on state, a main controller unit, MCU, (140) enters an active mode and allows the charging current to be transferred to the battery cell (110, 111), and when the switch unit (150) is in an off state, entering by the MCU (140) a sleep mode, which cuts off the charging current transferred to the battery cell (110, 111).

11. The control method as claimed in claim 10, further comprising providing a protection circuit unit (160) between the battery cell (110, 111) and the switch unit (150).

12. The control method as claimed in claim 10 or 11, further comprising, when the switch unit (150) is in an on state, entering by the MCU (140) the active mode, which allows a discharging current output from the battery cell (110, 111) to be transferred to an external device (20) connected to an output terminal (170), and when the switch unit (150) is in an off state, entering by the MCU (140) the sleep mode, which cuts off the discharging current transferred to the external device (20).

13. The control method as claimed in claim 12, further comprising providing a DC-DC converter (180) configured to convert a voltage, output from the battery cell (110, 111), into a voltage having a level for charging of the external device (20) to transfer to the output terminal (170) and/or wherein:
cutting off the charging current comprises, when the switch unit (150) is in an off state, turning off the charging unit (130) to cut off the charging current, and
the cutting off of the discharging current comprises, when the switch unit (150) is in an off state, turning off the DC-DC converter (180) to cut off the discharging current.

14. The control method as claimed in claims 10 to 13, wherein providing the switch unit (150) comprises providing a switch unit (150) including:
a charging field effect transistor, FET, configured to control the charging current input from the input terminal (120);
a discharging FET (152) configured to control the discharging current output to an output terminal (170); and
a slide switch (153) configured to switch the charging FET (151) and the discharging FET (152).

15. The control method as claimed in claims 11 to 14, further comprising displaying a charging state of the battery cell (110, 111) and a state of the MCU (140) using a display unit (190).
